Europäisches Patentamt

(19) European Patent Office

Office européen des brevets

(11) Publication number: **0 138 367**
A2

# (12) EUROPEAN PATENT APPLICATION

(21) Application number: **84306115.1**

(22) Date of filing: **07.09.84**

(51) Int. Cl.⁴: **H 04 M 1/00,** H 04 M 11/06

(30) Priority: **15.09.83 US 532621**

(43) Date of publication of application: **24.04.85**
Bulletin 85/17

(84) Designated Contracting States: **AT BE CH DE FR GB IT LI LU NL SE**

(71) Applicant: **Cooke, Kenneth, 18 St. Andrew Street, Guelph Ontario N1H 1N8 (CA)**

(72) Inventor: **Cooke, Kenneth, 18 St. Andrew Street, Guelph Ontario N1H 1N8 (CA)**

(74) Representative: **Paget, Hugh Charles Edward et al, MEWBURN ELLIS & CO. 2/3 Cursitor Street, London EC4A 1BQ (GB)**

(54) **Telephone acoustic coupler.**

(57) Apparatus for connecting a computer terminal or computer to an existing telephone line by modifying the handset of a telephone is described. Better connection of the computer or terminal to the line is achieved. The apparatus comprises an adapter 30 which replaces a mouthpiece cap 38 of a conventional telephone handset 12 and which connects a socket connector 34 parallel with microphone 32 in the mouthpiece. In the preferred embodiment, the socket 34 is a P.C. socket which is adapted to be connected to a P.C. plug 20 which in turn is connected to the computer terminal 16. A switch 36 is provided between the microphone and the P.C. socket to disconnect the microphone from the computer terminal when data is being transferred along the telephone line to and from the computer terminal. In another embodiment the P.C. socket fits into the mouthpiece cap and the switch is also located on the mouthpiece.

## TELEPHONE ACOUSTIC COUPLER

The present invention relates to telephone acoustic couplers and particularly, but not exclusively, to an acoustic coupler for use with a handset of a conventional telephone to enable computers and terminals to be connected to existing telephone lines.

Presently, computers are usually connected to a database or central computer by a separate telephone line which has to be leased from a telephone company. This requires the installation of a separate line resulting in additional expense. If an existing telephone line is used then an acoustic coupler is required between the telephone handset and the computer terminal. One such acoustic coupler has a cradle with a pair of resilient cups into which the earpiece and mouthpiece of the telephone handset fit. However, with this type of acoustic coupler it is frequently difficult to get a good quality connection, and there is no indication with such acoustic couplers that data is being properly transferred. It is only after completion of the message that it is possible to detect whether data has been correctly transferred.

These aforesaid disadvantages are considered to be one reason for limitation of the spread of computers and computer terminals to home, businesses and the like. An object of the present invention is to obviate or to mitigate the above disadvantages.

Broadly, the invention utilizes the fact that the mouthpiece of a conventional telephone handset is capable of receiving information as well as transmitting information. Thus, in the invention, a mouthpiece suitable for use with a conventional telephone handset may be modified to have an electrical connector connected in parallel with the microphone in the mouthpiece. The electrical connector is connectable to a computer or computer terminal to permit transfer of signals between the computer terminal and another location along an existing telephone line through the intermediary of the conventional telephone handset.

Accordingly, in one aspect of the present invention there is provided an adapter for use with a telephone handset comprising a housing adapted to be connected to the mouthpiece of the telephone handset, the housing having a microphone for converting an acoustic signal to an electrical signal, electrical terminal means located in the housing and adapted to receive an electrical connector connected to a separate conductor, said terminal means being electrically connected in parallel with the microphone to permit the transfer of data along an existing telephone line to said electrical terminal.

In a preferred embodiment, there is additionally provided means for decoupling the microphone from the terminal means.

In another aspect of the present invention there is provided a telephone handset comprising a earpiece, a mouthpiece means for connecting the earpiece and the mouthpiece to a power source, the mouthpiece having a microphone electrical terminal means associated with the mouthpiece and being adapted to receive another connector connected to a separate electrical conductor, said electrical terminal means being electrically connected in parallel with the microphone.

Preferably there is included means for electrically decoupling the microphone from the electrical connector means. Most preferably, the electrical decoupling means is a switch located on the exterior of the mouthpiece and is actuatable by the user to decouple the microphone means electrically from the socket means.

In yet another aspect of the invention there is provided a method of coupling an existing telephone line to an external conductor using the mouthpiece of a telephone handset comprising the steps of,

providing an electrical terminal connected in parallel with a microphone of said mouthpiece, and

providing the external conductor with a connector adapted to be connected to said electrical terminal means.

These and other optional features of the invention will be illustrated in the following embodiments which will be described with reference to the accompanying drawings in which:

FIG. 1 is a schematic diagram showing the interconnections between a telephone handset having an adapter according to one embodiment of the invention and a computer terminal;

FIG. 2 is a circuit diagram showing the interconnections between a socket, a mouthpiece microphone and an electrical switch in the mouthpiece of a telephone; and

FIG. 3 is a more detailed view of the mouthpiece of a handset having been modified in accordance with another embodiment to accommodate an electrical plug.

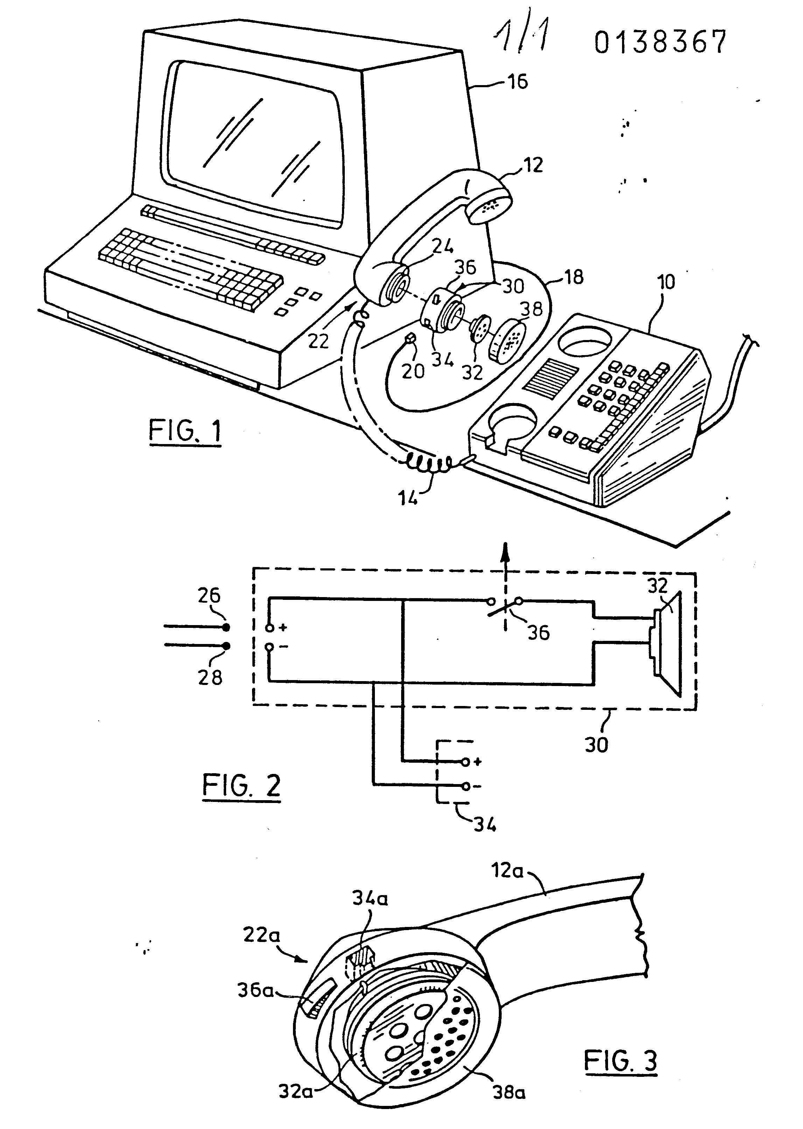

Referring now in detail to Fig. 1, a telephone console 10 has a handset 12 connected to the console by a coiled cable 14 carrying conductors which carry electrical signals to and from the handset. A computer terminal 16 has a conductor 18 which has a P.C. plug 20 at one end. A P.C. plug is a conventional telephone connector plug and is well known to those skilled in the art. One end of the telephone handset, generally indicated by reference numeral 22 is the mouthpiece end and this terminates in a screw-threaded portion 24. Contained within the screw-threaded portion is a cup (not shown in the interest of clarity) which has two terminals 26 and 28 for connection through the coiled wire 14 to the telephone power supply. An adapter, generally indicated by reference numeral 30, is adapted to be screwed onto the portion 24. The adapter 30 when connected to portion 24 makes an electrical connection between terminals 26 and 28 to the microphone 32 and to a P.C. socket 34 as best shown in the current diagram of Fig. 2. A switch 36 is provided in the positive conductor between the P.C. socket 34 and the microphone 32 to electrically decouple the microphone from the P.C. socket 34 when the P.C. plug 20 is inserted in the socket. The switch is of conventional form, and is mounted on the adaptor 30 for external access and manual operation by the user. A conventional mouthpiece telephone cover 38 is screwable onto the screw-threaded portion 40 of the adapter 30 to cover the microphone 32. The adapter is connected to the mouthpiece because the mouthpiece is capable of both transmitting and receiving data, a fact not generally realized even by people working in the field.

In order to use the adapter, the user simply unscrews the cap 38 of the mouthpiece 22 and removes the microphone 32. The adapter 30 is then screwed onto the mouthpiece 22 and the microphone 32 and cap 38 replaced. The P.C. 20 is then inserted into the socket 34 on the adapter 30, and the user operates switch 36 to place it in the desired operating condition. When the switch 36 is closed, the

- 5 - 0138367

telephone can be used in the usual manner, for voice communication. However, when the switch 36 is open (Fig. 2) the microphone 32 is disconnected from the positive supply line and only the P.C. socket 34 remains connected to the power supply, for electrical communication between the telephone power supply (external telephone lines) and computer terminal 16. A good connection is thus ensured between the computer terminal 16 and the appropriate telephone line. The opening of switch 36 is desirable so as to avoid the risk that the microphone 34 may pick up a sound signal and convert it into an electrical signal which could corrupt the transfer of data to and from the computer terminal, in the absence of such a switch, or with operation to the computer terminal with the switch closed.

In Fig. 3 another embodiment of the invention is shown in which the numerals denote like parts with the suffix "a". In this case there is no adapter housing inserted between the cap 38 and the mouthpiece 22a of the handset 12a. Instead the cap 38a of the mouthpiece has been modified to accommodate the P.C. socket 34a. The P.C. socket has been wired to be electrically connected in parallel with the microphone 32a as shown in Fig. 2 and the switch 36a has been located on the cap 38a as shown to facilitate easy operation by the user without undue modification of the shape and size of the handset. The operating procedure is the same as in the previous embodiment. In this embodiment however, the handset is dimensioned to fit into receptacles of the type shown in the handset in Fig. 1 more easily and the cap 38a does not require to be unscrewed.

Without departing from the scope of the invention it should be understood that the various modifications may be made to the embodiments described herein. For example, the P.C. socket does not require to be located in the handset at all but can be located in any convenient place on the telephone. However, it is appreciated that in the interest of economy it is most readily located in the mouthpiece cap and this simply requires that the conventional mouthpiece cap be removed with the microphone and replaced with the adapter shown in the embodiments. In addition, although the switch is shown either located on the adapter 30 or on the microphone cap of the mouthpiece and it is to be understood that this switch can be located in any convenient place for operation by the user, for example on the handle between the mouthpiece and the earpiece. Also, it is not necessary to have a switch connected in the positive supply line between the microphone and the P.C. socket. Such a switch can be located in the negative supply line. The switch can be arranged to be opened automatically by the connection of the computer terminal into the telephone handset. Instead of a switch there can be a sound depresser or cap for reducing the sensitivity of the microphone to sound when a P.C. plug is connected to the socket. Although the plug and sockets disclosed in the embodiments are of the P.C. type it should be understood that any other convenient plug and socket type may be used.

Advantages obtainable with the present invention are that there are no modifications required to existing telephone consoles, or telephone lines and the handset requires minimal modification. All that is involved is the simple removal of the mouthpiece cap and the connection of the apparatus according to the present invention; there is no requirement for an additional telephone line to be inserted and this obviates the cost of leasing or renting such a line as well as the need for installation. The plug and socket connection obtained is far superior to that obtained with existing acoustic couplers and the provision of the switch means that the possibility of corruption of data transferred between the telephone line and the computer terminal is minimised. The apparatus can also be used with other equipment such as audio equipment.

CLAIMS

1.    Apparatus for connecting an existing telephone line to an external conductor using a telephone handset, the handset having a mouthpiece, the apparatus comprising electrical terminal means connected in parallel with a microphone in the mouthpiece of the handset, and said electrical terminal means being adapted to be connected to said external conductor.

2.    Apparatus as claimed in claim 1 including electrical decoupling means connected between the microphone and the electrical terminal means for decoupling the signal from the microphone when the electrical conductor is connected to the electrical terminal means.

3.    An adapter for use with a telephone handset comprising a housing adapted to be connected to the mouthpiece of the telephone handset, the housing having a microphone means for converting an acoustic signal to an electrical signal, electrical terminal means located in the housing and adapted to receive an electrical connector connected to a separate external conductor, said electrical terminal means being electrically connected in parallel with the microphone by two conductors, to permit the transfer of data along an existing telephone line to said electrical terminal.

4.    An adapter as claimed in claim 3 including means for decoupling the microphone from the electrical terminal means.

5.  An adapter as claimed in claim 4 wherein the decoupling means is a switch located in one of the two conductors between the microphone and the electrical terminal means.

6.  A telephone handset comprising an earpiece, a mouthpiece, means for connecting the earpiece and the mouthpiece to an electrical power source, the mouthpiece having a microphone, electrical terminal means associated with the mouthpiece and being adapted to receive a connector connected to a separate electrical conductor, the electrical terminal means being electrically connected in parallel with the microphone.

7.  A handset as claimed in claim 6 including switch means for electrically decoupling the microphone from the electrical terminal means.

8.  A method of coupling an existing telephone line to an external conductor using the mouthpiece of a telephone handset comprising the steps of,
    providing an electrical terminal connected in parallel with a microphone of said mouthpiece, and
    providing the external conductor with a connector adapted to be electrically connected to said electrical terminal means.

9.  A method as claimed in claim 8 wherein the electrical terminal means is electrically decoupled from the microphone when data is being transferred along between said telephone line and the external conductor.

1/1    0138367

FIG. 1

FIG. 2

FIG. 3